# EUROPÄISCHE PATENTSCHRIFT

(11) **EP 2 769 529 B1**
(45) Veröffentlichungstag und Bekanntmachung des Hinweises auf die Patenterteilung: **27.05.2015**
(21) Anmeldenummer: 12773212.1
(22) Anmeldetag: 25.09.2012
(51) Int. Cl.: H04L 29/08, H04L 12/58

(54) **VERFAHREN ZUM ÜBERTRAGEN VON NACHRICHTEN AUS EINEM DATENNETZWERK AN EIN FAHRZEUG UND SERVEREINRICHTUNG FÜR EIN DATENNETZWERK**
METHOD FOR TRANSMITTING MESSAGES FROM A DATA NETWORK TO A VEHICLE AND SERVER DEVICE FOR A DATA NETWORK
PROCÉDÉ DE TRANSMISSION DE MESSAGES À UN VÉHICULE DEPUIS UN RÉSEAU DE DONNÉES ET DISPOSITIF SERVEUR POUR RÉSEAU DE DONNÉES

(30) Priorität: 18.10.2011 DE 102011116247
(43) Veröffentlichungstag der Anmeldung: 27.08.2014
(73) Patentinhaber: Audi AG, 85045 Ingolstadt (DE)
(72) Erfinder: WISCHHOF, Lars, 85051 Ingolstadt (DE); ROTTACH, Thomas, 80339 München (DE)
(74) Vertreter: Schuster, Simon
(86) Internationale Anmeldenummer: PCT/EP2012/004007
(87) Internationale Veröffentlichungsnummer: WO 2013/056781

(56) Entgegenhaltungen:
- WO-A2-2007/044881
- US-A1- 2004 064 734
- US-A1- 2009 047 929

## Beschreibung

Die Erfindung betrifft ein Verfahren, durch welches Nachrichten von einer Vielzahl von Datenquellen in einem Datennetzwerk an ein Fahrzeug ausgesendet werden. Bei dem Datennetzwerk kann es sich insbesondere um das Internet handeln. Zu der Erfindung gehört auch eine Servereinrichtung, welche über eine Netzwerkschnittstelle mit einem Datennetzwerk, also beispielsweise dem Internet, koppelbar ist. Unter einem Fahrzeug wird im Zusammenhang mit der Erfindung insbesondere ein Straßenfahrzeug, wie zum Beispiel ein Personenkraftwagen oder ein Lastkraftwagen, verstanden.

Bei Fahrzeugen ist es möglich, auch während einer Fahrt mittels eines Mobilfunkmoduls über eine Mobilfunkschnittstelle eine Kommunikationsverbindung mit einem Datennetzwerk, wie zum Beispiel dem Internet, aufzubauen. Sobald eine solche Datenverbindung hergestellt ist, können dann unterschiedliche Geräte des Fahrzeugs oder unterschiedliche in dem Fahrzeug durch ein Computergerät ausgeführte Computerprogramme Netzwerkverbindungen zu Servern in dem Datennetzwerk aufbauen. Wird beispielsweise über eine UMTS-Mobilfunkverbindung (UMTS - Universal Mobil Telecommunication System) eine Verbindung zu einem Internetprovider (ISP - Internet Service Provider) hergestellt, kann von diesem dem Mobilfunkmodul oder einem diesem nachgeschalteten Gateway oder Router des Fahrzeugs eine Internetadresse zugeordnet werden. Auf Grundlage dieser Internetadresse (IP-Adresse) und weiteren Protokollen (TCP - Transfer Control Protocol, UDP - User Datagram Protocol und dergleichen) können dann die einzelnen Geräte oder Programme unabhängig voneinander Daten mit Servern des Internets austauschen.

Ein im Zusammenhang mit Fahrzeugen besonders wichtiger Datendienst, der in einem Datennetzwerk bereitgestellt werden kann, ist die Übertragung von aktuellen Verkehrsdaten oder von Daten betreffend einen Zustand einer Fahrbahn. Hierzu ist bekannt, solche Daten mithilfe von im Verkehr befindlichen Fahrzeugen zu ermitteln, die ihre aktuelle Fahrgeschwindigkeit und beispielsweise mittels eines ESP (ESP - elektronisches Stabilisierungsprogramm) ermittelte Reibwerte einer Fahrbahnoberfläche an entsprechende Server im Datennetzwerk übermitteln. Die gesammelten Daten werden dann von dem Server wieder an die Fahrzeuge verteilt, so dass in jedem Fahrzeug die Informationen über die aktuelle Verkehrslage und den momentanen Zustand der Fahrbahnen verfügbar wird.

Die mittels einer Mobilfunkschnittstelle ermöglichte Übertragung von Daten zwischen einem (ortsfesten) Netzwerkdienstleister einerseits und einem Fahrzeug andererseits ist naturgemäß bandbegrenzt, das heißt es können in einem vorbestimmten Zeitintervall nur begrenzt viele Daten übertragen werden. Da es aber möglich ist, dass einzelne Geräte und Programme unabhängig voneinander Datenverbindungen mit Servern des Netzwerks unterhalten, ist nicht vorhersehbar, ob es nicht zu einem Engpass bei der Datenübertragung kommen kann. Tritt dieser Fall einmal ein, kann dies sogar zur Gefährdung der Sicherheit der Fahrzeuginsassen führen. Wird die Bandbreite der Mobilfunkschnittstelle beispielsweise vollständig zum Übertragen von Filmdaten zu einem Spielfilm in Anspruch genommen, welcher in dem Fahrzeug wiedergegeben wird, können hierdurch Verzögerungen bei der Übertragung von wichtigeren Daten, wie beispielsweise Verkehrsdaten oder Warnungen vor Blitzeis, verzögert werden.

Aus der DE 10 2008 061 304 A1 ist eine Kommunikationseinrichtung für ein Fahrzeug zum drahtlosen Übertragen von fahrzeugrelevanten Daten bekannt, die zwei Kommunikationseinheiten umfasst. Mittels einer ersten Einheit werden erste Daten und mittels der zweiten Einheit ausgewählte zweite Daten an das Fahrzeug übertragen. Die Entscheidung darüber, an welche der Einheiten Daten übertragen werden, erfolgt dabei in Abhängigkeit von einer Priorität der Daten. Zudem können die Kommunikationseinheiten derart ausgeführt sein, dass sie beim Empfangen von Daten entscheiden, ob es sich bei einer empfangenen Nachricht um eine speziell für das Fahrzeug vorgesehene Nachricht oder um eine allgemeine Nachricht für eine Vielzahl von Fahrzeugen handelt. Nachteilig bei diesem letzten Aspekt ist allerdings, dass die Daten zunächst über die Funkschnittstelle übertragen werden müssen, bevor über ihre Relevanz entschieden werden kann.

In dem Dokument WO 2007/044881 ist ein Verfahren zum Überwachen von Fahrzeugzuständen beschrieben, gemäß dem ein Netzwerk-Infonmations-Speicher ("NIR") von Fahrzeugen Daten über deren Zustand bzw. Verhalten, wie z.B. eine Geschwindigkeit, und Aktualisierungen hierzu empfängt. Deren tatsächliches Verhalten wird mit einem zu erwartenden Verhalten verglichen. Bei einem abweichenden Verhalten der Fahrzeuge wird eine Information diesbezüglich an ein Funknetzwerk übertragen und an einen Benutzer weitergegeben oder über Rundfunk ausgegeben.

Aufgabe der vorliegenden Erfindung ist es, bei der Übertragung von Nachrichten von einer Vielzahl von Datenquellen in einem Datennetzwerk zu einem über eine Mobilfunkschnittstelle an das Datennetzwerk angebundenes Fahrzeug sicherzustellen, dass der Nachrichterverkehr reibungslos verläuft.

Die Aufgabe wird durch ein Verfahren gemäß Patentanspruch 1 sowie durch eine Servereinrichtung gemäß Patentanspruch 7 gelöst. Vorteilhafte Weiterbildungen des Verfahrens sind durch die Unteransprüche gegeben.

Das erfindungsgemäße Verfahren geht von der eingangs beschriebenen problematischen Situation aus, dass die Nachrichten von einer Vielzahl von (unabhängigen) Datenquellen eines Datennetzwerks, zum Beispiel dem Internet, an ein Fahrzeug ausgesendet werden können. Unter einer Nachricht wird hierbei eine durch ein oder mehrere Datenpakete repräsentierte Information verstanden. Erfindungsgemäß werden diese Nachrichten nun nicht dem Fahrzeug direkt, sondern einer Servereinrichtung des Datennetzwerks zugeführt. Durch diese Servereinrichtung werden die Nachrichten dann hinsichtlich ihrer Relevanz und Dringlichkeit für das Fahrzeug klassifiziert. Mit anderen Worten wird jede Nachricht einer aus einer Mehrzahl von vorbestimmten Nachrichtenklassen zugeordnet. Dabei werden Nachrichten einer ersten Nachrichtenklasse von der Servereinrichtung unmittelbar an das Fahrzeug übertragen. Nachrichten einer weiteren, zweiten Nachrichtenklasse werden dagegen in der Servereinrichtung gespeichert. Sie blockieren damit nicht die Übertragung der Nachrichten der ersten Nachrichtenklasse. Schließlich ist bei dem erfindungsgemäßen Verfahren vorgesehen, eine dritte Nachrichtenklasse vorzusehen und Nachrichten, die der dritten Nachrichtenklasse zugeordnet werden, sogar zu löschen.

Bei der oben genannten Servereinrichtung kann es sich beispielsweise um einen Bestandteil eines so genannten IT-Backends (IT - Information Technology) für die Koordination des Datenverkehrs zwischen dem Datennetz und dem Fahrzeug handeln. Eine entsprechende für den Einsatz in einem solchen IT-Backend geeignete Servereinrichtung ist ebenfalls Bestandteil der Erfindung. Die erfindungsgemäße Servereinrichtung umfasst eine Netzwerkschnittstelle, über welche sie mit einem Datennetzwerk, also beispielsweise dem Internet, koppelbar ist. Die erfindungsgemäße Servereinrichtung ist dabei dazu ausgelegt, Nachrichten für ein bestimmtes Fahrzeug über die Netzwerkschnittstelle entgegenzunehmen. Diese Nachrichten können dann durch die Servereinrichtung jeweils fahrzeug- und/oder nachrichtenabhängig einer vorbestimmten Nachrichtenklasse zugeordnet werden. Wie bereits beschrieben, werden dann Nachrichten, die einer bestimmten ersten Nachrichtenklasse zugeordnet wurden, unmittelbar an das Fahrzeug weitergeleitet, Nachrichten einer zweiten Nachrichtenklasse für das Fahrzeug zwischengespeichert und Nachrichten einer dritten Nachrichtenklasse gelöscht.

Das erfindungsgemäße Verfahren und die erfindungsgemäße Servereinrichtung weisen den Vorteil auf, dass mit ihnen ein Fahrzeug gezielt informiert werden kann, auch wenn die unterschiedlichen Informationen in Form von unabhängig von mehreren Nachrichtenquellen ausgesendeten Nachrichten vorliegen. Dies vermeidet den Verbrauch von Ressourcen, wie beispielsweise Übertragungskapazität einer Mobilfunkschnittstelle und Rechenleistung eines Empfangssystems im Fahrzeug, wie er sich sonst ergeben würde, wenn auch nicht-relevante Daten gleichzeitig mit relevanten Daten übertragen würden. Die zweite Nachrichtenklasse kann dazu auch noch in Unterklassen aufgeteilt sein, in welche die Nachrichten dann hinsichtlich ihrer Priorität bei der Übertragung und/oder einer höchstens zulässigen Verzögerung der Übertragung einsortiert werden.

Um die Bandbreite eines Funkkanals für die Übertragung von Nachrichten zu dem Fahrzeug effizient zu nutzen, hat es sich als zweckmäßig erwiesen, die Nachricht den einzelnen Nachrichtenklassen in Abhängigkeit von einer Eigenschaft des Fahrzeugs zuzuordnen, für welches die Nachrichten bestimmt sind. So kann vorgesehen sein, die Nachrichten in Abhängigkeit von einem Ort zu klassifizieren, an welchem sich das Fahrzeug momentan befindet. Hierdurch kann festgestellt werden, ob beispielsweise Nachrichten über Verkehrsereignisse an einem von dem Fahrzeug weit entfernten Ort gelöscht werden können, weil sie keinen Einfluss auf das Fortkommen des Fahrzeugs haben. Genauso kann aber auch eine geplante Fahrtroute des Fahrzeugs einer Klassifikation zugrunde gelegt werden. So lassen sich Nachten über Verkehrsereignisse entlang der Fahrtroute als für das Fahrzeug relevant erkennen. Somit können solche Nachrichten zusammengetragen und an das Fahrzeug übertragen werden, welche zu einer frühzeitigen Information des Fahrers über vorausliegende Verkehrsflussstörungen betreffen. Die Auswahl der Nachrichten kann auch in Abhängigkeit von einer Identität einer im Fahrzeug befindlichen Person erfolgen. Hat beispielsweise eine Person ein großes Interesse an Nachrichten bezüglich eines Sportereignisses und daher in einem entsprechenden Nutzerprofil für ein Infotainmentsystem eine bevorzugte Zustellung von Nachrichten betreffend solche Sportereignisse eingetragen, so ist nun erkennbar, dass eine Nachricht an das Fahrzeug weitergeleitet werden sollte, wenn sich die Person in dem Fahrzeug befindet.

Die Klassifikation kann auch in Abhängigkeit von einer Ausstattung des Fahrzeugs erfolgen. Verfügt das Fahrzeug beispielsweise über ein elektronisches Stabilitätsprogramm (ESP), dessen Funktionsweise sich durch Vorgabe von bekannten Reibwerten eines Straßenbelags steuern lässt, so macht es für ein solches Fahrzeug Sinn, Nachrichten an dieses zu übertragen, welche aktuell gemessene Reibbeiwerte betreffen. Des Weiteren kann die Klassifikation auch in Abhängigkeit von in dem Fahrzeug befindlichen, gerade aktiven Systemen desselben erfolgen. Benutzt eine Person in dem Fahrzeug beispielsweise gerade einen Datendienst, wie etwa ein Chatprogramm, so ist es zweckmäßig, entsprechende Chat-Nachrichten sofort an das Fahrzeug weiterzuleiten, damit diese Person über Benachrichtigungen anderer Nutzer informiert ist.

Im Zusammenhang mit einer fahrzeugabhängigen Zuordnung der Nachrichten zu den einzelnen Nachrichtenklassen kann schließlich auch vorgesehen sein, die Nachrichten in Abhängigkeit von bereits zuvor an das Fahrzeug übertragenen Nachrichten zu klassifizieren. So wird verhindert, dass Nachrichten an das Fahrzeug übertragen werden, welche von diesem zum Übertragungszeitpunkt noch gar nicht verarbeitet werden können, weil noch Informationen fehlen, ohne die sich die Nachricht nicht sinnvoll interpretieren lässt.

Anstelle von oder zusätzlich zur fahrzeugabhängigen Zuordnung sieht eine andere Weiterbildung des erfindungsgemäßen Verfahrens vor, die Nachrichten in Abhängigkeit von einer Art der Nachricht und/oder einem Inhalt der Nachricht den unterschiedlichen Klassen zuzuordnen. Nachrichten, die ihrer Art nach der Unterhaltung der im Fahrzeug befindlichen Personen dienen, können somit solange zurückgehalten werden, bis Nachrichten betreffend die Sicherheit der Personen, wie beispielsweise Verkehrsnachrichten, erfolgreich zugestellt wurden. Innerhalb einer Nachrichtenart kann dann noch weiter differenziert werden, indem der Inhalt der Nachricht ebenfalls zur Klassifizierung genutzt wird.

Die von der Servereinrichtung zwischengespeicherten Nachrichten sollten zu einem späteren Zeitpunkt ebenfalls an das Fahrzeug übertragen werden, wenn der Übertragungskanal beispielsweise nicht durch sofort zu übertragene Nachrichten ausgelastet ist. Hierzu sieht eine Ausführungsform des erfindungsgemäßen Verfahrens vor, zu einer gespeicherten Nachricht durch die Servereinheit zu überprüfen, ob ein vorbestimmtes Aussendekriterium erfüllt ist. Ein solches Aussendekriterium kann je nach dem, wie das Verfahren konkret realisiert wird, unterschiedlich aussehen. Beispiele für Aussendekriterien sind eine Auslastung eines Übertragungskanals, ein Ablauf eines Timers, durch welchen bestimmt wird, wie lange eine Nachricht in dem Zwischenspeicher der Servereinrichtung zu speichern ist, das Erreichen eines bestimmten Orts durch das Fahrzeug und das Aktivieren eines bestimmten Systems in dem Fahrzeug.

Im Zusammenhang mit den gespeicherten und später zu versendenden Nachrichten sieht eine zweckmäßige Ausführungsform des erfindungsgemäßen Verfahrens vor, mehrere gespeicherte Nachrichten zu einem Nachrichtenbündel oder Nachrichtenpaket zusammenzufassen und zu komprimieren. Anschließend kann dieses komprimierte Nachrichtenpaket dann an das Fahrzeug übertragen werden. Durch gesammeltes Übertragen von Nachrichten mit geringerer Dringlichkeit ergibt sich in vorteilhafter Weise eine Verringerung des Übertragungsoverheads.

Eine bevorzugte Ausführungsform des erfindungsgemäßen Verfahrens sieht vor, dass die Servereinrichtung Nachrichten an das Fahrzeug im Rahmen einer Client-Server-Kommunikation ohne Anfrage des Clients, hier also dem Fahrzeug, überträgt. Diese Form der Übertragung wird im Folgenden als Pushen bezeichnet. Durch ein solchen Push-Verfahren ergibt sich der Vorteil, dass als von der Servereinrichtung besonders wichtig erkannte Nachrichten ohne Verzögerung an das Fahrzeug weitergeleitet werden können. Die Servereinrichtung ist nicht darauf angewiesen, eine Abfrage durch das Fahrzeug abzuwarten.

Zu der Erfindung gehören auch Weiterbildungen der erfindungsgemäßen Servereinrichtung, welche Merkmale umfassen, die bereits im Zusammenhang mit den Weiterbildungen des erfindungsgemäßen Verfahrens erläutert wurden. Aus diesem Grund werden die Merkmale der entsprechenden Weiterbildungen der erfindungsgemäßen Servereinrichtung hier nicht noch einmal erläutert.

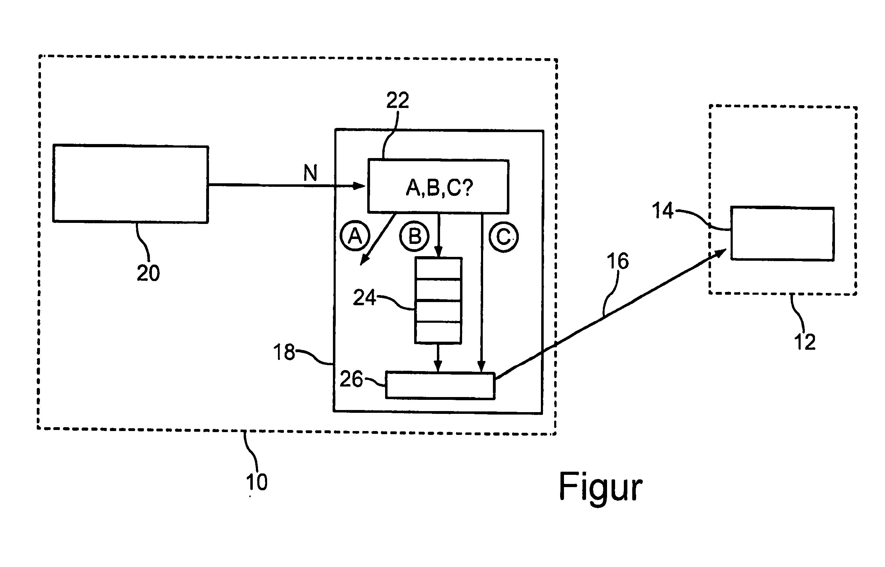

Die Erfindung wird im Folgenden anhand von Ausführungsbeispielen näher erläutert. Dazu zeigt die Figur ein Fahrzeug, das Nachrichten von einem Push-Server empfängt, welcher eine Ausführungsform der erfindungsgemäßen Servereinrichtung darstellt.

Die Beispiele stellen bevorzugte Ausführungsformen der Erfindung dar.

Die Figur zeigt ein IT-Backend 10, das aus einem oder mehreren Computern gebildet sein kann. Durch das Backend 10 werden Informationen für ein Fahrzeug 12 gesammelt, auf deren Grundlage in dem Fahrzeug 12 unterschiedliche Funktionalitäten bereitgestellt werden. Das Backend 10 reguliert hierbei den Datenstrom, den das Fahrzeug 12 empfängt. Bei dem Fahrzeug 12 kann es sich beispielsweise um einen Personenkraftwagen oder einen Lastkraftwagen handeln. Die Funktionalitäten werden in dem Fahrzeug 12 durch einzelne Dienstprogramme 14 bereitgestellt, von denen in der Figur lediglich eines beispielhaft dargestellt ist. Die Dienstprogramme werden in dem Fahrzeug 12 durch eines oder mehrere Steuergeräte ausgeführt.

Zum Übertragen der Informationen von dem Backend 10 hin zu dem Fahrzeug 12 sind das Backend 10 und das Fahrzeug 12 über eine Kommunikationsverbindung 16 miteinander verbunden. So kann beispielsweise vorgesehen sein, dass ein (nicht dargestelltes) Mobilfunkmodul des Fahrzeugs 12 über eine Mobilfunkschnittstelle, wie etwa UMTS oder LTE (Long Term Evolution), mit einem Internet-Service-Provider (ISP) verbunden ist. Eine Kommunikationseinrichtung des Fahrzeugs 12 kann dann auf Grundlage einer von dem ISP dem Fahrzeug zugeordneten Internetadresse die Kommunikationsverbindung 16 als TCP/IP-Verbindung (IP - Internet Protocol) zu dem Backend 10 hin aufgebaut haben. Dabei kann vorgesehen sein, dass die über die Kommunikationsverbindung 16 übertragenen Daten verschlüsselt werden, beispielsweise mittels des SSL-Verfahrens (SSL - Secure Socket Layer). Um das Fahrzeug 12 vor einer Fremdmanipulation über eine weitere Datenverbindung zu schützen, kann vorgesehen sein, dass das Fahrzeug 12 ausschließlich solche Daten entgegennimmt, die über die Kommunikationsverbindung 16 empfangen werden.

Innerhalb des Backends 10 wird die Kommunikationsverbindung 16 von einem Push-Server 18 des Backends 10 verwaltet. Durch den Push-Server 18 wird entschieden, welche an das Fahrzeug 12 gerichtete Informationen tatsächlich über die Kommunikationsverbindung 16 übertragen werden. Der Push-Server 18 überträgt diese Daten dann gemäß einem Push-Verfahren, wie es beispielsweise durch das Bayeux-Protokoll beschrieben ist. Bei dem Push-Server 18 kann es sich um ein einzelnes Gerät oder auch um mehrere Geräte handeln. Es ist auch möglich, den gesamten Push-Server 18 oder Teile desselben als ein oder mehrere Dienstprogramme zu realisieren.

Bei den über die Kommunikationsverbindung 16 übertragenen Informationen handelt es sich sowohl um Verkehrsinformationen als auch um solche Informationen, wie sie beispielsweise durch ein Infotainmentsystem den in dem Fahrzeug befindlichen Personen dargeboten werden, also beispielsweise Nachrichten, Wetterdaten, Informationen aus dem Internet, welche die Personen über einen Web-Browser abrufen, oder auch Chat- oder Facebook-Benachrichtigungen. Diese Informationen empfängt das Backend 10 aus einem Datennetzwerk, beispielsweise dem Internet, über einen (nicht dargestellten) Router des Backends 10. Eine weitere Datenquelle für Informationen stellen weitere Fahrzeuge dar, die ebenfalls über Kommunikationsverbindungen ähnlich der Kommunikationsverbindung 16 mit dem Backend 10 verbunden sind. Eine Datenverarbeitungseinheit 20 sammelt diese Informationen von den Fahrzeugen und stellt daraus Nachrichten betreffend einen aktuellen Zustand von Fahrbahnoberflächen und betreffend den Verkehrsfluss auf unterschiedlichen Straßen zusammen. Die Fahrzeuge übertragen dazu Informationen zu ihrer aktuellen Geschwindigkeit und gemessenen Reibwerten, wie sie durch die Antiblockiersysteme und elektronischen Stabilisierungsprogramme der Fahrzeuge ermittelt werden, sowie weitere Betriebsparameter der Fahrzeuge.

Da die Bandbreite der Mobilfunkschnittstelle, über welche die Kommunikationsverbindung 16 hergestellt wurde, begrenzt ist, ist es nicht möglich, zu jedem Zeitpunkt die Fülle der aus dem Internet und von der Einrichtung 20 erzeugten Datenpakete oder Nachrichten zugleich über die Kommunikationsverbindung 16 ohne Verzögerung an das Fahrzeug 12 weiterzuleiten. Da zudem die Rechenkapazität der Steuergeräte in dem Fahrzeug 12 begrenzt ist, würde durch das ständige Pushen von Nachrichten das Fahrzeug auch mit zum Teil unnötigen oder unzulässigen Informationen belastet, wie beispielsweise Werbung oder Nachrichten betreffend die Reibwerte von Straßen, die sich in einer großen Entfernung zum Fahrzeug 12 befinden. In der Figur sind die bei dem Push-Server 18 eintreffenden Nachrichten N, die zur Übertragung an das Fahrzeug 12 bestimmt sind, nur diejenigen gekennzeichnet, die von der Einrichtung 20 erzeugt werden.

Um ein "Verstopfen" der Kommunikationsverbindung 16 zu vermeiden, werden die eintreffenden Nachrichten durch den Push-Server 18, das heißt die zu pushenden Nachrichten, klassifiziert. Klassifikationskriterien können dabei sein: Der momentane Ort des Fahrzeugs, eine Identität des Fahrers des Fahrzeugs, eine Art der Nachricht, eine Art der im Fahrzeug aktiven Anwendung und/oder Systeme, die Ausstattung des Fahrzeugs, die im Fahrzeug bereits vorliegenden Informationen, wie sie etwa bereits vorher an das Fahrzeug gesendet worden sein können, oder eine Route des Fahrzeugs. Entsprechend dieser Klassifikationskriterien werden die Nachrichten N hinsichtlich Relevanz und Dringlichkeit für das Fahrzeug durch den Push-Server 18 klassifiziert. In dem gezeigten Beispiel werden der Klassifizierung drei Klassen A, B, C zugrunde gelegt. Durch eine Entscheidungseinheit 22 des Push-Servers 18 wird entschieden, welcher der Klassen A, B, C eine Nachricht N zuzuordnen ist. Nachrichten, die für das Fahrzeug nicht relevant sind, werden verworfen (Klasse A). Nachrichten mit geringer Dringlichkeit werden im Push-Server 18 gesammelt (Klasse B). Sie werden dazu in einem Speicher 24 zwischengespeichert. Relevante Nachrichten, die dem Fahrzeug 12 mit möglichst geringerer Verzögerung zugestellt werden sollten, werden durch die Entscheidungseinheit 22 unmittelbar an eine Sendeeinrichtung 26 des Push-Servers 18 weitergeleitet.

Durch die Sendeeinrichtung 26 werden die zu versendenden Nachrichten dann über die Kommunikationsverbindung 16 an das Fahrzeug 12 weitergeleitet. Die in dem Speicher 24 befindlichen Nachrichten werden von dem Push-Server 18 regelmäßig daraufhin überprüft, ob sie ebenfalls an das Fahrzeug 12 weitergeleitet werden können. Falls mehrere Nachrichten aus dem Speicher 24 zur Übertragung bereit sind, kann auch vorgesehen sein, diese gesammelt und gegebenenfalls komprimiert zuzustellen.

Durch das Beispiel ist gezeigt, wie bei einem Fahrzeug ermöglicht werden kann, dass dieses über eine Funkschnittstelle Daten aus unterschiedlichen, unabhängigen Datenquellen empfängt, ohne dass es hierbei zu einer Überlastung der Funknetzanbindung kommt und gegebenenfalls wichtige Nachrichten nicht schnell genug übertragen werden können.

## Patentansprüche

1. Verfahren, bei welchem Nachrichten (N) von einer Vielzahl von Datenquellen in einem Datennetzwerk an ein Fahrzeug (12) ausgesendet werden und die Nachrichten (N) nicht dem Fahrzeug (12) direkt, sondern einer Servereinrichtung (18) des Datennetzwerks zugeführt werden, wo die Nachrichten (N) durch die Servereinrichtung (18) jeweils einer aus einer Mehrzahl von vorbestimmten Nachrichtenklassen (A, B, C) zugeordnet werden und Nachrichten (N) einer ersten Nachrichtenklasse (C) von der Servereinrichtung (18) sofort an das Fahrzeug (12) übertragen werden, Nachrichten (N) einer zweiten achrichtenklasse (B) in der Servereinrichtung (18) gespeichert werden **dadurch gekennzeichnet, dass** Nachrichten (N) einer dritten Nachrichtenklasse (A) gelöscht werden,
mehrere gespeicherte Nachrichten (N) der zweiten Nachrichtenklasse (B) von der Servereinrichtung (18) zu einem Nachrichtenpaket zusammengefasst und anschließend an das Fahrzeug (12) übertragen werden.

2. Verfahren nach Anspruch 1, wobei die Zuordnung der Nachrichten (N) fahrzeugabhängig erfolgt.

3. Verfahren nach Anspruch 2, wobei die Zuordnung in Abhängigkeit von einem momentanen Ort des Fahrzeugs (12), einer geplanten Fahrtroute des Fahrzeugs (12), einer Identität von in dem Fahrzeug (12) befindlichen Personen, einer Ausstattung des Fahrzeugs (12), von in dem Fahrzeug (12) befindlichen, gerade aktiven Systemen (14), von bereits zuvor von dem Fahrzeug (12) empfangenen Nachrichten erfolgt.

4. Verfahren nach einem der vorhergehenden Ansprüche, wobei die Zuordnung einer Nachricht (N) nachrichtenabhängig erfolgt.

5. Verfahren nach Anspruch 4, wobei die Zuordnung in Abhängigkeit von einer Art der Nachricht (N) und/oder einem Inhalt der Nachricht (N) erfolgt.

6. Verfahren nach einem der vorhergehenden Ansprüche, wobei zu einer gespeicherten Nachricht (N) durch die Servereinheit (18) überprüft wird, ob ein vorbestimmtes Aussendekriterium erfüllt ist, und gegebenenfalls die gespeicherte Nachricht (N) von der Servereinrichtung (18) an das Fahrzeug (12) übertragen wird.

7. Verfahren nach einem der vorhergehenden Ansprüche, wobei zu einem Nachrichtenpaket zusammengefasste Nachrichten komprimiert und anschließend als komprimiertes Nachrichtenpaket an das Fahrzeug (12) übertragen werden.

8. Verfahren nach einem der vorhergehenden Ansprüche, wobei die Servereinrichtung (18) Nachrichten (N) mittels eines Push-Verfahrens an das Fahrzeug (12) überträgt.

9. Verfahren nach einem der vorhergehenden Ansprüche, wobei das Datennetzwerk das Internet ist.

10. Servereinrichtung (18), welche über eine Netzwerkschnittschnelle mit einem Datennetzwerk koppelbar und dazu ausgelegt ist, Nachrichten (N) für ein bestimmtes Fahrzeug (12) über die Netzwerkschnittstelle entgegenzunehmen und die Nachrichten (N) jeweils fahrzeug- und/oder nachrichtenabhängig einer aus einer Mehrzahl von vorbestimmten Nachrichtenklassen (A, B, C) zuzuordnen und dabei Nachrichten (N) einer ersten Nachrichtenklasse (C) sofort an das Fahrzeug (12) weiterzuleiten, Nachrichten (N) einer zweiten Nachrichtenklasse (B) für das Fahrzeug (12) zwischenzuspeichern,
**dadurch gekennzeichnet, dass**
die Servereinrichtung (18) dazu ausgelegt ist, Nachrichten (N) einer dritten Nachrichtenklasse (A) zu löschen, mehrere gespeicherte Nachrichten (N) der zweiten Nachrichtenklasse (B) zu einem Nachrichtenpaket zusammenzufassen und anschließend an das Fahrzeug (12) zu übertragen.

## Claims

1. Method in which messages (N) are sent to a vehicle (12) from a plurality of data sources in a data network and the messages (N) are not delivered directly to the vehicle (12) but to a server device (18) of the data network, where each of the messages (N) is assigned to one of a plurality of predetermined message classes (A, B, C) by the server device (18), messages (N) in a first message class (C) are immediately transmitted to the vehicle (12) by the server device (18), and messages (N) in a second message class (B) are stored in the server device (18), **characterised in that** messages (N) in a third message class (A) are deleted and a plurality of stored messages (N) in the second message class (B) are combined by the server device (18) to form a message packet and then transmitted to the vehicle (12).

2. Method according to claim 1, wherein the messages (N) are assigned depending on the vehicle type.

3. Method according to claim 2, wherein the assignment depends on a location of the vehicle (12) at that time, a planned travel route of the vehicle (12), an identity of people in the vehicle (12), equipment of the vehicle (12), currently active systems (14) in the vehicle (12) and messages which have previously been received by the vehicle (12).

4. Method according to any of the preceding claims, wherein a message (N) is assigned depending on the message type.

5. Method according to claim 4, wherein the assignment depends on the type of the message (N) and/or the content of the message (N).

6. Method according to any of the preceding claims, wherein, for a stored message (N), the server unit (18) checks whether a predetermined sending criterion has been fulfilled and, if so, the stored message (N) is transmitted to the vehicle (12) from the server device (18).

7. Method according to any of the preceding claims, wherein messages combined to form a message packet are compressed and then transmitted to the vehicle (12) in the form of a compressed message packet.

8. Method according to any of the preceding claims, wherein the server device (18) transmits messages (N) to the vehicle (12) by means of a push method.

9. Method according to any of the preceding claims, wherein the data network is the internet.

10. Server device (18) which can be coupled to a data network by means of a network interface and is designed to receive messages (N) intended for a specific vehicle (12) by means of the network interface and to assign each of the messages (N) to one of a plurality of predetermined message classes (A, B, C) depending on the vehicle and/or message type, and in doing so to immediately transmit messages (N) in a first message class (C) to the vehicle (12) and to temporarily store messages (N) in a second message class (B) for the vehicle (12), **characterised in that** the server device (18) is designed to delete messages (N) in a third message class (A) and to combine a plurality of stored messages (N) in the second message class (B) to form a message packet and then transmit said stored messages to the vehicle (12).

## Revendications

1. Procédé, dans lequel des messages (N) sont transmis d'une pluralité de sources de données dans un réseau de données à un véhicule (12) et les messages (N) ne sont pas acheminés directement au véhicule (12), mais à un dispositif serveur (18) du réseau de données, dans lequel les messages (N) sont affectés par le dispositif serveur (18) respectivement à l'une d'une pluralité de classes de messages prédéterminées (A, B, C) et les messages (N) d'une première classe de messages (C) sont transférés immédiatement par le dispositif serveur (18) au véhicule (12) tandis que les messages (N) d'une deuxième classe de messages (B) sont stockés dans le dispositif serveur (18), **caractérisé en ce que** les messages (N) d'une troisième classe de messages (A) sont effacés, plusieurs messages stockés (N) de la deuxième classe de messages (B) sont regroupés par le dispositif serveur (18) en un paquet de messages et sont ensuite transférés au véhicule (12).

2. Procédé selon la revendication 1, dans lequel l'affectation des messages (N) se fait en fonction du véhicule.

3. Procédé selon la revendication 2, dans lequel l'affectation se fait en fonction d'un emplacement momentané du véhicule (12), d'une route de déplacement planifiée du véhicule (12), d'une identité des personnes se trouvant dans le véhicule (12), d'un équipement du véhicule (12), de systèmes précisément actifs (14) se trouvant dans le véhicule (12) et de messages déjà reçus auparavant par le véhicule (12).

4. Procédé selon l'une quelconque des revendications précédentes, dans lequel l'affectation d'un message (N) se fait en fonction des messages.

5. Procédé selon la revendication 4, dans lequel l'affectation se fait en fonction du type de message (N) et/ou du contenu du message (N).

6. Procédé selon l'une quelconque des revendications précédentes, dans lequel l'unité de serveur (18) vérifie sur un message stocké (N) si un critère d'émission prédéterminé est satisfait et, éventuellement, si le message stocké (N) est transféré par le dispositif serveur (18) au véhicule (12).

7. Procédé selon l'une quelconque des revendications précédentes, dans lequel les messages regroupés en un paquet de messages sont comprimés et ensuite transférés au véhicule (12) sous forme de paquet de messages comprimé.

8. Procédé selon l'une quelconque des revendications précédentes, dans lequel le dispositif serveur (18) transfère des messages (N) au véhicule (12) par un procédé de poussée.

9. Procédé selon l'une quelconque des revendications précédentes, dans lequel le réseau de données est Internet.

10. Dispositif serveur (18), qui peut être couplé à un réseau de données via une interface de réseau et conçu de manière à recevoir des messages (N) pour un certain véhicule (12) via l'interface de réseau et à affecter les messages (N), respectivement en fonction du véhicule et/ou des messages, à l'une d'une pluralité de classes de messages prédéterminées (A, B, C) en faisant en sorte de transférer les messages (N) d'une première classe de messages (C) immédiatement au véhicule (12) et de stocker les messages (N) d'une deuxième classe de messages (B) pour le véhicule (12),
**caractérisé en ce que** :
le dispositif serveur (18) est conçu pour effacer les messages (N) d'une troisième classe de messages (A), regrouper plusieurs messages stockés (N) de la deuxième classe de messages (B) en un paquet de messages et transférer ensuite celui-ci au véhicule (12).
